# EUROPÄISCHE PATENTANMELDUNG

(11) **EP 2 615 690 A2**
(43) Veröffentlichungstag der Anmeldung: **17.07.2013**
(21) Anmeldenummer: 13162778.8
(22) Anmeldetag: 15.09.2008
(51) Int. Cl.: H01Q 13/02, H01Q 19/08, H01Q 1/22, G01F 23/284

(54) **Baukasten für ein Füllstandsradar-Antennensystem**

(62) Teilanmeldung aus: 08164367.8
(71) Anmelder: VEGA Grieshaber KG, 77709 Wolfach (DE)
(72) Erfinder: Kienzle, Klaus, 77736 Zell am Harmersbach (DE); Fehrenbach, Josef, 77716 Haslach (DE); Motzer, Jürgen, 77723 Gengenbach (DE); Falk, Johannes, 78112 St. Georgen (DE); Lenk, Fritz, 77761 Schiltach (DE)
(74) Vertreter: Maiwald Patentanwalts GmbH

(57) **Zusammenfassung**

Die Erfindung betrifft ein Baukastensystem zum Herstellen einer Füllstandsradarantenne, eine Füllstandsradarantenne und ein Füllstandsradar. Das Baukastensystem weist mehrere Module auf, die miteinander verbunden werden können. Auf diese Weise lassen sich ganz verschiedene Füllstandsradarantennen herstellen, die optimal an die entsprechenden Bedingungen angepasst sind.

## Beschreibung

### Gebiet der Erfindung

Die Erfindung betrifft die Füllstandsmessung. Insbesondere betrifft die Erfindung ein Baukastensystem zum Herstellen einer Füllstandsradarantenne, eine Füllstandsradarantenne sowie ein Füllstandsradar.

### Technologischer Hintergrund

Im Bereich der Füllstandsradarmessung werden unterschiedliche Messsysteme verwendet, die jeweils an die entsprechende Messumgebung angepasst sind. Je nach Anwendungsgebiet kommen unterschiedliche Frequenzen für die Sendesignale in Frage. Die möglichen Frequenzen reichen bis über 100 GHz. Je nach äußerer Umgebung, verwendeter Sendefrequenz und gewünschter maximaler Aufweitung des Sendesignals, nachdem es die Antenne verlassen hat, werden ganz unterschiedliche Antennengräßen und Antennenformen eingesetzt.

Dies bedeutet für den Endverbraucher, dass er je nach der von ihm gewünschten Spezifikation eine entsprechend konfektionierte Antenne beziehen muss. Ändern sich die an die Antenne gestellten Anforderungen stark, muss eine neue Antenne bezogen werden.

### Zusammenfassung der Erfindung

Es ist eine Aufgabe der Erfindung, ein Füllstandsradar-Antennensystem anzugeben, welches eine erhöhte Flexibilität aufweist.

Es sind ein Baukastensystem zum Herstellen einer Füllstandsradarantenne, eine Füllstandsradarantenne sowie ein Füllstandsradar gemäß den Merkmalen der unabhängigen Ansprüche angegeben, Weiterbildungen der Erfindung ergeben sich aus den Unteransprüchen.

Die beschriebenen Ausführungsbeispiele betreffen gleichermaßen das Baukastensystem, das Füllstandsradar sowie die Füllstandsradarantenne. In anderen Worten lassen sich die im Folgenden im Hinblick auf die Füllstandsradarantenne genannten Merkmale auch in dem Baukastensystem oder dem Füllstandsradar implementieren, und umgekehrt.

Gemäß einem Ausführungsbeispiel der Erfindung ist ein Baukastensystem zum Herstellen einer Füllstandsradarantenne angegeben, welches ein erstes Modul und ein zweites Modul aufweist. Das erste Modul ist als Basisantennenhorn ausgeführt, das mit dielektrischem Material gefüllt ist und zur Speisung des zweiten Moduls mit einem Sendesignal dient. Das zweite Modul ist zum Abstrahlen des Sendesignals zu einer Füllgutoberfläche ausgeführt, wobei das zweite Modul ein Erweiterungshorn, eine Parabolantenne, ein gefülltes Antennenhorn, ein Antennenhorn mit Linse, eine Standrohrantenne oder eine Stabantenne ist.

Mit diesem Baukastensystem ist ein Antennensystem für ein Füllstandsradar angegeben, bei dem ein kleines, gefülltes und kompaktes Antennenhorn (Basisantennenhorn) die Einkopplung für verschiedene weitere Antennensysteme (die zweiten Module) ermöglicht und gleichzeitig auch für sich selbst, also ohne jegliche Erweiterung, zur Füllstandsmessung mit Radar eingesetzt werden kann. Dieses Antennenhorn wird im Folgenden "Basishom", "Basisantennenhorn" oder "Basishornantenne" genannt.

Gemäß einem weiteren Ausführungsbeispiel der Erfindung ist das erste Modul (Basisantennenorn) zur lösbaren Verbindung mit dem zweiten Modul ausgeführt.

Auf diese Weise ist es möglich, dass das zweite Modul auf einfache Art und Weise ausgetauscht wird, wenn die Füllstandsradarantenne beispielsweise in einer anderen Messumgebung eingesetzt werden soll, welche zum Beispiel eine andere Fokussierung des Sendestrahls erfordert.

Gemäß einem weiteren Ausführungsbeispiel der Erfindung weist das erste Modul ein erstes Gewinde und das zweite Modul ein dem ersten Gewinde entsprechendes Gegengewinde zum Erzeugen der lösbaren Verbindung auf.

Auf diese Weise können die beiden Module aneinandergeschraubt werden. An dieser Stelle sind aber auch andere Verbindungsarten möglich. Beispielsweise können die beiden Module mit einer Flanschverbindung verbunden werden. Dabei werden die beiden Module beispielsweise mit vier Schrauben verbunden. Eine weitere Möglichkeit ist eine Steckverbindung, die dann auf in bekannter Weise einrastet.

Gemäß einem weiteren Ausführungsbeispiel der Erfindung weist das Baukastensystem weiterhin ein drittes Modul auf, welches als Hohlleiter ausgeführt ist (sogenannter Speisehohlleiter). Auch das dritte Modul kann über eine lösbare Verbindung mit dem ersten Modul verbunden werden.

Gemäß einem weiteren Ausführungsbeispiel der Erfindung weist das erste Modul einen Hohlleiterabschnitt auf, über den das Sendesignal von der Quelle, beispielsweise einem Elektronikmodul des Füllstandsradars, zugeführt wird.

Gemäß einem weiteren Ausführungsbeispiel der Erfindung ist der Hohlleiter und/oder der Hohlleiterabschnitt des ersten Moduls mit einem Glasfenster versehen, welches eine Dicke aufweist, die ungefähr einem ganzzahligen Vielfachen einer halben Wellenlänge des Sendesignals entspricht.

Auf diese Weise kann eine Prozesstrennung hinsichtlich Druck bereitgestellt werden (also ein Ex-Zonen trennendes Element in explosionsgefährdeten Bereichen).

Um die Bandbreite des Glasfensters zu erhöhen, kann dieses ein- oder beidseitig mit einem Dielektrikum mit niedrigerem DK-Wert (also einer niedrigen Dielektrizitätskonstante) beschichtet werden. Beispielsweise eignet sich hierzu PTFE. Die Beschichtung weist jeweils eine ungefähre Dicke von λ/4 des verwendeten Materials auf. Mit beispielsweise zwei λ/4-dicken PTFE-Scheiben verdoppelt sich die Bandbreite des Glasfensters nahezu.

Gemäß einem weiteren Ausführungsbeispiel der Erfindung ist das zweite Modul als Cassegrain-Antenne ausgeführt. Es handelt sich hierbei also um eine besondere Form der Parabolantenne.

Gemäß einem weiteren Ausführungsbeispiel der Erfindung weist das erste Modul eine Linse auf, die zwischen dem ersten Modul und dem zweiten Modul angeordnet ist.

Gemäß einem weiteren Ausführungsbeispiel der Erfindung ist die Linse zum Einkoppeln des Sendesignals in das zweite Modul ausgeführt.

Gemäß einem weiteren Ausführungsbeispiel der Erfindung ist das Baukastensystem für Frequenzen des Sendesignals im Bereich zwischen 75 GHz und 110 GHz ausgeführt. Auch kann es für Frequenzen unterhalb 75 GHz oder oberhalb 110 GHz ausgeführt sein.

Gemäß einem weiteren Ausführungsbeispiel der Erfindung ist der Übergang zwischen dem ersten Modul und dem zweiten Modul oder auch der Übergang zwischen dem ersten Modul und dem dritten Modul spaltfrei ausgestaltet, so dass das zweite Modul direkt an der Ante enfüllung des ersten Moduls beginnt bzw. sich das dritte Modul direkt an das erste Modul anschließt.

Gemäß einem weiteren Ausführungsbeispiel der Erfindung ist eine Füllstandsradarantenne angegeben, die ein erstes Modul und ein zweites Modul eines oben beschriebenen Baukastensystems aufweist.

Gemäß einem weiteren Ausführungsbeispiel der Erfindung ist ein Füllstandsradar mit einer Füllstandsradarantenne angegeben, die ein erstes Modul und ein zweites Modul eines oben beschriebenen Baukastensystems aufweist.

Im Folgenden werden mit Verweis auf die Figuren Ausführungsbeispiele der Erfindung beschrieben.

### Kurze Beschreibung der Figuren

Fig. 1 zeigt eine Schnittdarstellung eines ersten Moduls gemäß einem Ausführungsbeispiel der Erfindung.
Fig. 2 zeigt eine Schnittdarstellung eines ersten Moduls, eines zweiten Moduls und eines dritten Moduls gemäß einem Ausführungsbeispiel der Erfindung.
Fig. 3 zeigt eine vergrößerte Darstellung eines Bereichs der Anordnung gemäß Fig. 2.
Fig. 4 zeigt ein erstes Modul mit einem zweiten Modul, das als Cassegrain-Antenne ausgeführt ist.
Fig. 5A zeigt eine Schnittdarstellung eines ersten Moduls gemäß einem weiteren Ausführungsbeispiel der Erfindung.
Fig. 5B zeigt eine Ausschnittsvergrößerung des Moduls der Fig. 5A.
Fig. 6 zeigt eine Schnittdarstellung eines ersten Moduls gemäß einem weiteren Ausführungsbeispiel der Erfindung.
Fig. 7A zeigt eine Schnittdarstellung eines ersten Moduls gemäß einem weiteren Ausführungsbeispiel der Erfindung.
Fig. 7B zeigt eine Vergrößerung eines Ausschnitts des Moduls der Fig. 7A.
Fig. 8 zeigt ein Füllstandsradar gemäß einem Ausführungsbeispiel der Erfindung.

### Detaillierte Beschreibung bevorzugter Ausführungsbeispiele

Die Darstellungen in den Figuren sind schematisch und nicht maßstäblich.

In der folgenden Figurenbeschreibung werden für die gleichen oder ähnlichen Elemente die gleichen Bezugsziffern verwendet.

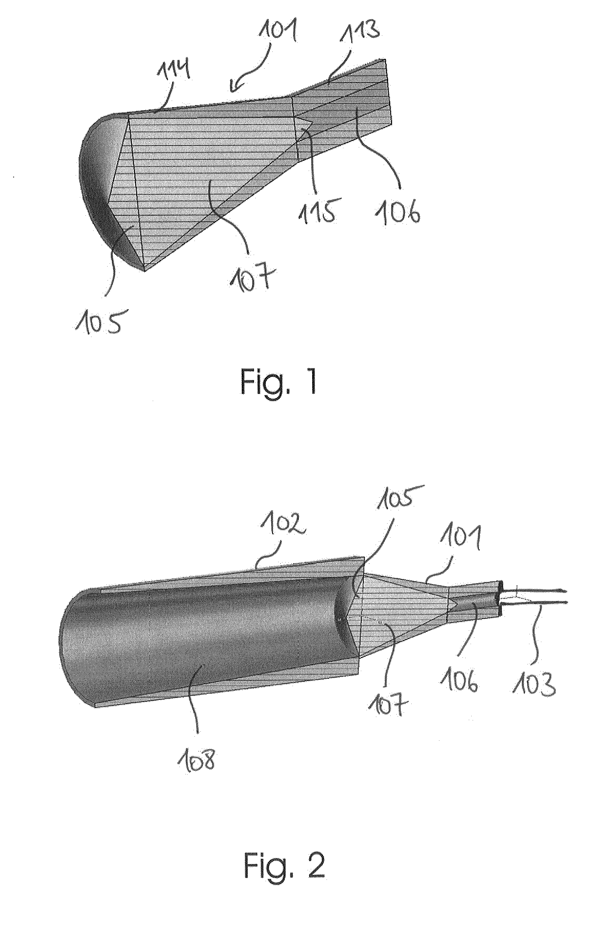

Fig. 1 zeigt eine Schnittdarstellung eines Basisantennenhorns 101. Das Basisantennenhorn 101 weist ein Antennengehäuse 113, 114 auf. Der Bereich des Gehäuses 114 ist konisch gestaltet, so dass er einen Antennentrichter bildet, der mit einem dielektrischen Material 107 zumindest teilweise gefüllt ist. Der Bereich 113 ist zylindrisch gestaltet, so dass er einen Hohlleiterabschnitt 106 ausbildet. In den Hohlleiterabschnitt 106 ragt eine konisch zulaufende Spitze 115 der dielektrischen Füllung 107 hinein.

Weiterhin ist eine Linse 105 vorgesehen, die ebenfalls aus dielektrischem Material besteht.

Beispielsweise können die Linse 105, die Antennenfüllung 107 und die konische Spitze 115 einstückig geformt sein.

Auch können diese drei Elemente 105, 107 und 115 aneinandergesetzt sein und aus verschiedenen Materialien gefertigt sein.

Das Basishorn 101 ist das zentrale Element, also die Basis des Baukastensystems. Es ist so konzipiert, dass damit alle anderen Antennentypen oder Antennenerweiterungen, welche im Folgenden noch genauer spezifiziert werden, damit gespeist werden können. Zusätzlich kann es bereits für sich selbst, also auch ohne Erweiterung in irgendeiner Form, zur Füllstandsmessung eingesetzt werden. Dies hat den Vorteil, dass zum einen auch in sehr kleinen ehälteröffnungen gemessen werden kann und zum anderen je nach Anforderung, Anwendung und Platzverhältnissen verschiedene Erweiterungen angebracht werden können.

Beispielsweise wird die aus den einzelnen Modulen erstellte Füllstandsradarantenne im W-Band eingesetzt. Das W-Band reicht von 75 GHz bis 110 GHz. Insbesondere kann die Füllstandsradarantenne bei einer Mittenfrequenz von 79 GHz (Bandbreite beispielsweise +- 2 GHz oder +- 3 GHz) eingesetzt werden. Hierbei kann das asishorn 101 z. B. einen äußeren Durchmesser von 19,05 cm (0,75") aufweisen, was dann bei einer Wandstärke des Antennenhorns von 0,5mm einer Antennenapertur von etwa 18 mm entspricht.

An dieser Stelle sei angemerkt, dass die Frequenz von 79 GHz auch im sog. E-Band liegt, das von 60 GHz bis 90 GHz reicht, da sich diese "Normbänder" überschneiden.

Wäre die Antenne ungefüllt, hätte das Antennenhorn 114 eine optimale Länge von etwa 110 mm. Durch die Füllung mit einem dielektrischen Material (beispielsweise Polytetrafluoroethylen (PTFE) oder Polypropylen (PP)) und einer aufgesetzten Linse 105 aus gleichem Material kann die Hornlänge auf ca. ein Viertel, also 25 bis 30 mm reduziert werden. Die Linse kann dabei jegliche Form aufweisen und kann insbesondere auch aus einem anderen dielektrischen Material ausgeführt sein, solange sie als Sammellinse oder als konvexe Linse arbeitet. Beispielsweise ist die Linse sphärisch, asphärisch oder eine Fresnel-Linse. Auch kann die Linse kegelförmig sein. Insbesondere wird durch die Anbringung der Linse in einer entsprechenden Form ein verbessertes Abtropfverhalten von Kondensatanhaftungen erreicht.

Das asishorn 101 selbst ist auf der nicht abstrahlenden Seite mit einem Hohlleiter 106, 113 ausgebildet, der gefüllt oder ungefüllt sein kann. Falls der Hohlleiter ungefüllt ist, kann die dielektrische Füllung 107 des Antennenhorns 114 in den Hohlleiter 106 hinein auslaufen. Dies ist durch die Spitze 115 gezeigt. Bei einem Kegelhorn kann beispielsweise die dielektrische Füllung bis zur fiktiven Spitze des Kegels, welcher durch das Kegelhorn gebildet wird, ausgebildet sein. Die Spitze im Hohlleiter kann natürlich auch einen anderen Winkel als den Öffnungswinkel des Antennentrichters 114 annehmen.

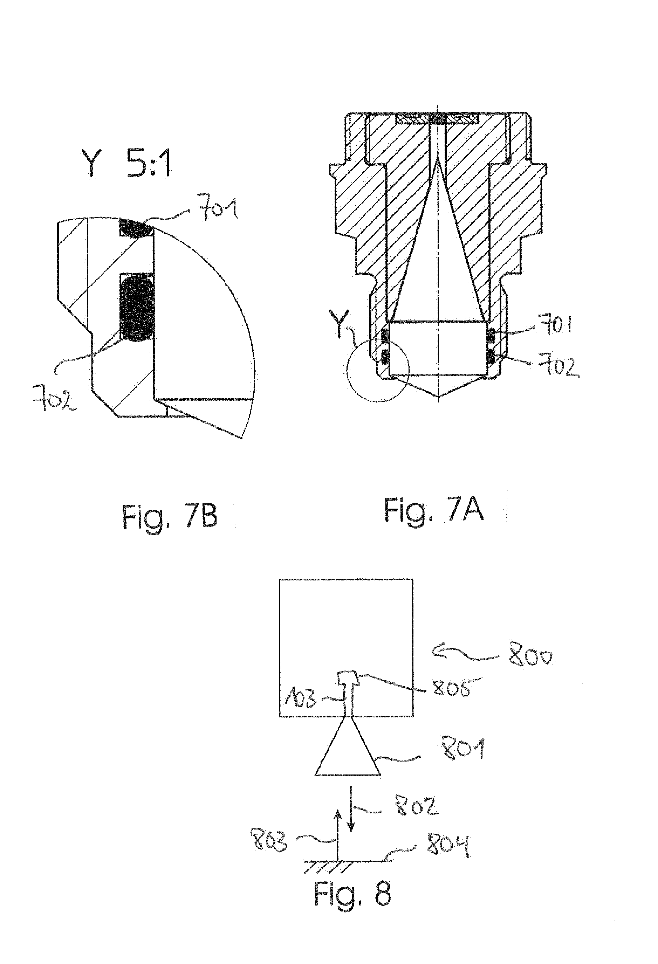

Beispielsweise ist der Hohlleiter beim Kegelhorn als Rundhohlleiter ausgeführt. Der Hohlleiter kann aber auch eine andere Form, z. B. oval oder rechteckig, annehmen. In diesem Hohlleiter 106, 113 werden die Mikrowellensignale von der Elektronik- bzw. Hochfrequenzeinheit 805 ein- und/oder ausgekoppelt (siehe Fig. 8).

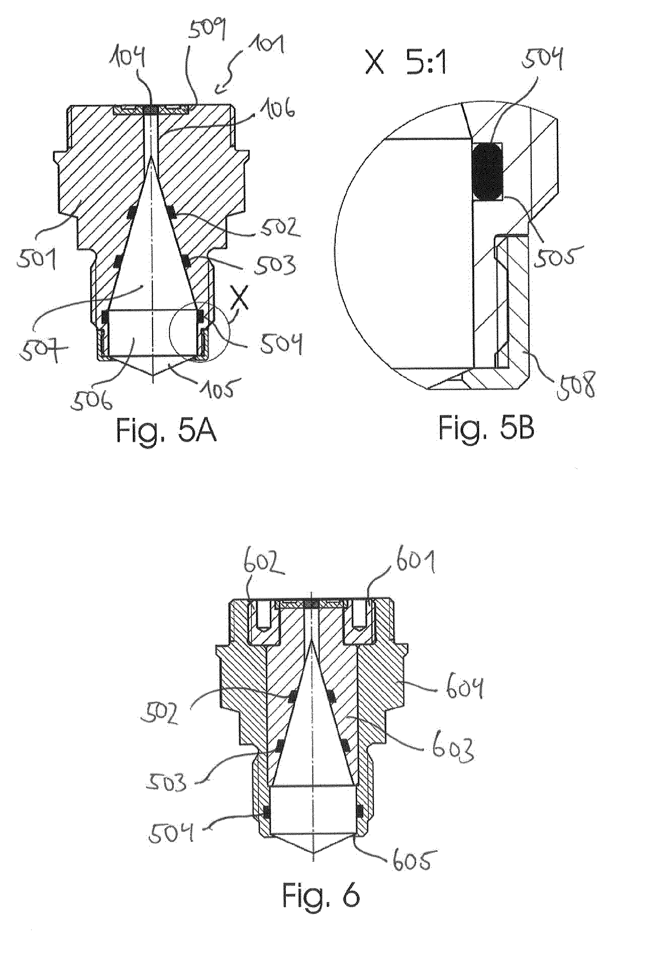

Der Hohlleiter 106 oder ein sich daran anschließender Hohlleiter 103 kann mit einem Glasfenster 104 ausgerüstet sein (siehe beispielsweise Fig. 5A). Dieses Glasfenster dient als zonentrennendes Element. Das Glasfenster hat zur optimalen Funktion die Dicke von Lambda-Halbe oder ein Vielfaches davon. Lambda ist hierbei die Wellenlänge des Sendesignals (bezogen auf die Mittenfrequenz des Systems). Der Wert Lambda-Halbe bezieht sich auf die Dielektrizitätskonstante des für das Fenster verwendeten Glases, ist also die halbe Wellenlänge des Sendesignals innerhalb des Glasfensters.

Um die Bandbreite zu erhöhen, kann das Glasfenster ein- oder beidseitig mit einem Dielektrikum mit niedrigerem DK-Wert beschichtet werden. Als Material eignet sich hierzu beispielsweise PTFE. Die Montage kann beispielsweise durch aufkleben auf das Glas erfolgen. Die Dicke dieses Dielektrikums sollte zur optimalen Funktion Lambda-Viertel betragen. Lambda ist hierbei ebenfalls die Wellenlänge des Sendesignals bezogen auf die Mittenfrequenz des Systems. Der Wert Lambda-Viertel bezieht sich auf die Dielektrizitätskonstante des für die Beschichtung verwendeten Materials, ist also ein Viertel der Wellenlänge des Sendesignals innerhalb der verwendeten Beschichtung des Glasfensters.

Die Montage des Glasfensters kann, wie in den Fig. 5A, 6, 7A gezeigt, oben am Hohlleiterelement 106 ausgeführt sein. Die Befestigung des Glasfensters am Hohlleiter 106 erfolgt beispielsweise mittels einer Schweißung, kann aber auch mit einem umlaufenden Gewinde realisiert werden.

Wie bereits oben ausgeführt, kann das Basishorn 101 direkt zur Messung im Prozess eingesetzt werden. Des weiteren kann es aber auch zur Einkopplung mit anderen Antennen eingesetzt werden. Nachfolgend werden verschiedene zusätzliche Baukastenmodule beschrieben, an die das Basisantennenhorn 101 angeschlossen werden kann.

Fig. 2 zeigt eine Schnittdarstellung eines Basisantennenhorns 101, das an seiner Vorderseite an ein Erweiterungshorn 102 angeschlossen ist und welches an seiner Rückseite an einen Hohlleiter 103 angeschlossen ist.

Das asishorn 101 wird also zur Einkopplung in das Erweiterungshorn 102 verwendet. In diesem Fall kann das Erweiterungshorn 102 kürzer gebaut sein, als wenn direkt vom Hohlleiter 103 auf das Erweiterungshorn 102 aufgeweitet werden würde (das Erweiterungshorn also direkt am Hohlleiter 103 angeschlossen wäre).

Das Erweiterungshorn 102 ist im Inneren 108 konisch ausgeführt. Das Innere 108 des Erweiterungshorns 102 kann "leer" sein oder teilweise oder vollständig mit einem dielektrischen Material gefüllt sein.

Der Hohlleiter 103 ist mit dem Hohlleiterabschnitt 106 des Basishorns 101 beispielsweise verschraubt, so dass er leicht wieder gelöst werden kann.

Natürlich kann der Hohlleiter 106 des Basishorns 101 auch direkt an die Elektronik des Füllstandsradars angeschlossen sein.

Im W-Band kommen beispielsweise die folgenden Abmessungen in Betracht:
- Ein Antennenhorn mit einem Durchmesser von 5,08 cm (2 Zoll) hat inklusive der Einkopplung in einen Hohlleiter mit 3,1 mm Innendurchmesser eine Gesamtlänge von 425 mm.
- Ein Erweiterungshorn (Modul 2) mit einem Durchmesser von 5,08 cm (2 Zoll) hat inklusive dem Basishorn (Modul 1) mit 19 mm Durchmesser (0,75 Zoll) eine Gesamtlänge von 270 mm.

Dies bedeutet eine Verkürzung der Antenne auf 64 % der ursprünglichen Länge.
- in Antennenhorn mit einem Durchmesser von 2,54 cm (1 Zoll) hat inklusive der Einkopplung in einen Hohlleiter mit 3,1 mm Innendurchmesser eine Gesamtlänge von 150 mm.
- in Erweitcrungshorn (Modul 2) mit einem Durchmesser von 2,54 cm (1 Zoll) hat inklusive dem Basishorn (Modul 1) mit 19 mm Durchmesser (0,75 Zoll) eine Gesamtlänge von 115 mm.

Hieraus ergibt sich eine Verkürzung auf 77 % der ursprünglichen Länge.

Insbesondere bei großen Antennen macht sich eine deutliche Verkürzung der Antennenlänge bemerkbar, jeweils bei vergleichbaren elektrischen Antennenkenndaten, wie Antennengewinn oder 3dB-Öffnungswinkel.

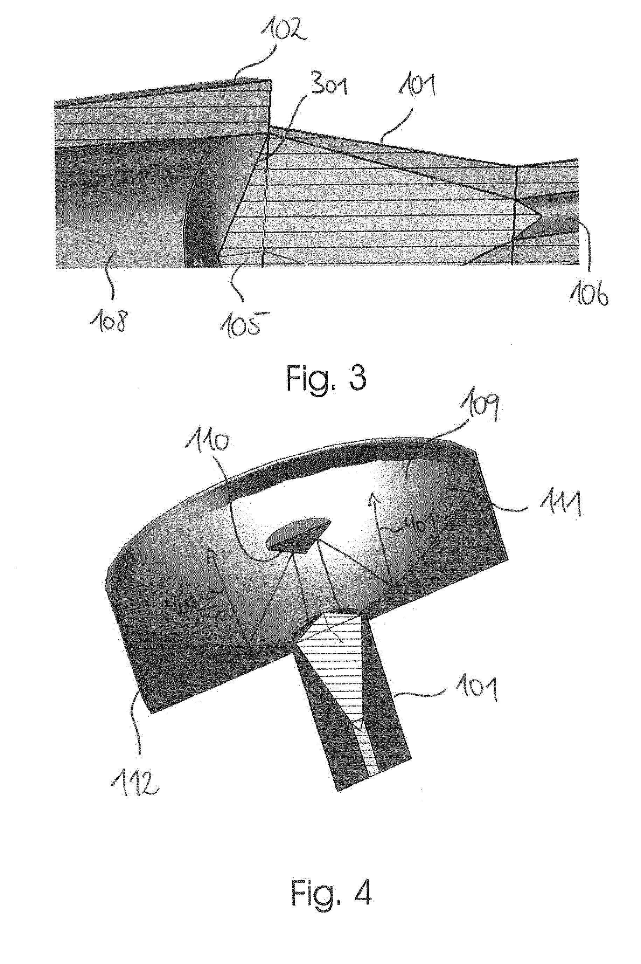

Fig. 3 zeigt eine vergrößerte Darstellung eines Teilabschnitts der Anordnung gemäß Fig. 2. Der Übergang 301 zwischen dem Basishorn 101 und dem Erweiterungshorn 102 ist spaltfrei ausgeführt und das Erweiterungshorn 102 beginnt direkt am Ende der Antennenfüllung bzw. der Linse 105.

Es sind auch andere Ausführungsformen möglich, bei denen z. B. das Erweiterungshorn einen etwas größeren Durchmesser aufweist als die Füllung des asishorns 101.

Die Befestigung des Erweiterungshorns 102 an dem asishorn 101 erfolgt beispielsweise über ein Gewinde. Das Erweiterungshorn wird dann einfach auf das Basishorn aufgeschraubt.

An dieser Stelle sind aber auch andere Verbindungsarten möglich. Beispielsweise können die beiden Module mit einer Flanschverbindung verbunden werden. Dabei werden die beiden Module beispielsweise mit vier Schrauben verbunden. Eine weitere Möglichkeit wäre eine Steckverbindung, die dann auf irgend eine Art und Weise einrastet.

Fig. 4 zeigt ein weiteres Ausführungsbeispiel, bei dem das Basishorn 101 zur Einkopplung in eine Cassegrain-Parabolantenne verwendet wird. Die Parabolantenne 109 weist einen konischen Reflektor 110, einen Parabolspiegel 111 sowie einen Antennenkragen 112 auf. Die Pfeile 401, 402 symbolisieren das Sendesignal.

Das Verhältnis zwischen der Brennweite f und dem Durchmesser D (f/D-Verhältnis) des Parabolspiegels beträgt beispielsweise 0,27, so dass der Subreflektor 110 innerhalb des Spiegels bzw. innerhalb des Spiegels und dessen Spiegelrand 112 liegt. Eine solche Anordnung ist beispielsweise in der EP 1619747 A1 gezeigt.

Beispielsweise ist der Subreflektor 110 hyperpolisch geformt. Er kann aber auch andere Formen annehmen, beispielsweise eine Kegelform.

Die Befestigung des Subreflektors erfolgt beispielsweise mit zwei oder mehr Stegen, welche innerhalb des Parabolspiegels oder am Spiegelrand befestigt werden. Diese Befestigung kann z. B. durch Schweißen erfolgen.

Der Übergang von der Hornantenne 101 1 zum Parabolspiegel 109 erfolgt beispielsweise spaltfrei.

Auch kann das Basishorn 101 zur Einkopplung in ein weiteres gefülltes Antennenhorn verwendet werden. Bei diesem Ausführungsbeispiel ist das sog. Erweiterungshorn 102 ebenfalls mit einem oder mehreren verschiedenen dielektrischen Materialien gefüllt. An dessen Ende ist wiederum eine Linse angebracht. Die Linse kann dabei jegliche Form haben, solange sie nur als Sammellinse oder als konvexe Linse arbeitet. Beispielsweise ist sie sphärisch, asphärisch, oder als Fresnel-Linse ausgeführt oder vereinfacht auch nur kegelförmig. Durch die Füllung und die Linse kann das Antennensystem noch einmal verkürzt werden. Gleichzeitig bringt die Linsenform ein verbessertes Abtropfverhalten bei Kondensatanhaftungen.

Auch kann das Basishorn zur Einkopplung in ein größeres Horn mit Linse eingesetzt werden.

Bei dieser Ausführungsform bleibt das sog. Erweiterungshorn zwar ungefüllt. Allerdings befindet sich an dessen vorderen Ende eine Sammellinse aus dielektrischem Material, um die Antennenlänge zu verkürzen. Die möglichen Linsenformen sind oben bereits beschrieben.

Ebenso kann das Basishorn zur Einkopplung in eine Standrohrantenne oder eine Stabantenne eingesetzt werden.

Im Folgenden werden mögliche Befestigungen der Antennenfüllung an dem Gehäuse der Basisantenne 101 beschrieben.

Fig. 5A zeigt eine Schnittdarstellung einer Basisantenne 101 gemäß einem Ausführungsbeispiel der Erfindung. Das Antennengehäuse 501 ist einstückig ausgeführt. In dieser Ausführungsform ist die Füllung 506, 507 der Antenne zusammen mit der Linse 105 von vorne in das Gehäuse 501 eingeschoben und darin montiert. Befestigt und gehalten wird die Füllung von einem von vorne angeschraubten Haltering 508. Dieser Haltering 508 ist im Detail in Fig. 5B abgebildet.

Der Haltering 508 ist beispielsweise mit Hilfe eines Gewindes montiert. Auch kann der Haltering 508 aus einem flexiblen Material gefertigt sein. In diesem Fall kann er an dem Gehäuse 501 angeklickt werden. Auch kann er mit dem Gehäuse verklebt oder verschweißt werden.

Weiterhin sind mehrere Dichtringe 502, 503, 504 vorgesehen, die in entsprechende ringförmige Aussparungen 505 des Gehäuses eingesetzt sind.

Die dielektrische Füllung des Antennenhorns weist neben der Linse 105 zwei weitere Bereiche 506, 507 auf. Der Bereich 506 ist zylindrisch ausgeführt, der Bereich 507 ist kegelförmig ausgeführt und ragt mit seiner Spitze in den Hohlleiterabschnitt 106 der Basisantenne 101 hinein. Der zylindrische Bereich 504 kann auch komplett entfallen, so dass die Füllung nur konisch ist. Die Abdichtungen sind in diesem Fall auch nur im konischen Bereich angeordnet.

Weiterhin ist das Glasfenster 104 abgebildet, welches in eine entsprechende Aussparung einer Trägerplatte 509 eingepasst ist. Die Trägerplatte 509 befindet sich in einer entsprechenden Aussparung des Gehäuses 501.

Die Füllung 506, 507 mit der Linse 105 kann einstückig oder zwei- bzw. dreiteilig ausgeführt sein.

Der Haltering 508 dient insbesondere im Falle einer mehrteiligen Ausführung der Füllung 506, 507, 105 dazu, die einzelnen Teile aneinander zu pressen.

Die Fig. 6 und 7A, 7B zeigen zwei weitere Ausführungsformen des Basishorns 101, bei dem die Antennenfüllung von hinten (also von der Seite, die der Elektronik zugewandt ist) aus montiert und verschraubt wird. Die Antennenfüllung ist ein- oder zweiteilig ausgeführt.

In den Fig. 6 bzw. 7A, 7B sind verschiedene Möglichkeiten der O-Ring-Montage der Dichtringe 502, 503, 504 bzw. 701, 702 gezeigt. Beispielsweise sind zwei O-Ringe 502, 503 im Bereich des kegelförmigen Abschnitts der Füllung angeordnet, wohingegen ein dritter O-Ring 504 im Bereich des zylindrischen Abschnitts der Füllung angeordnet ist (siehe Fig. 6). Auch können die O-Ringe 701, 702 lediglich im zylindrischen Bereich der Füllung angeordnet sein (siehe Fig. 7A, 7B).

Auch kann der Einstich für einen O-Ring anstatt im Antennenhorn auch teilweise oder ganz in der Füllung sein. Mit "Einstich" ist eine Aussparung (Nut), in welcher der O-Ring liegt, wie sie in der Fig. 5B abgebildet ist, zu verstehen.

Wie in Fig. 6 zu erkennen, wird die Füllung im vorderen Bereich des Gehäuses 604 durch eine umlaufende Nase 605 gehalten. Im hinteren Bereich wird die Füllung durch den Ring 601, 602 fixiert.

In diesem Ausführungsbeispiel wird in das Gehäuse 604 ein Element 603 eingeschoben, welches das tatsächliche Antennenhorn ausbildet. In anderen Worten ist das Gehäuse im Gegensatz zu der Ausführungsform der Fig. 5A mehrteilig.

Das Element 603 besteht z.B. aus Metall, vorzugsweise Edelstahl oder Aluminium. Es ist auch möglich, einen Kunststoff wie zum Beispiel PBT (VALOX mit Glasfaser), welcher mindestens an der Innenkontur metallisiert ist, zu verwenden.

Das Gehäuse 604 besteht ebenfalls aus Metall, vorzugsweise Edelstahl.

Fig. 7B zeigt eine Detailvergrößerung des Abschnitts Y der Fig. 7A. Der Vergrößerungsmaßstab beträgt, wie auch in der Fig. 5B, 5:1.

Eine weitere Möglichkeit zur Befestigung der Füllung ist das Einspritzen mit einem Thermoplast, also beispielsweise Perfluoralkoxypolymer (PFA). Dieses wirkt dann wie eine Art "Schmelzkleber". Bei dieser Ausführung ist das System auch gleichzeitig abgedichtet.

Genauso ist es möglich, die Füllung komplett einzuspritzen, beispielsweise mit PFA. Auch bei dieser Ausführungsform ist das System bereits ohne O-Ringe abgedichtet.

Fig. 8 zeigt ein Füllstandsradar 800 mit einer Füllstandsradarantenne 801, die ein oben beschriebenes erstes und zweites Modul aufweist. Weiterhin ist ein Hohlleiter 103 vorgesehen, der die Antenne 801 mit einer Elektronik 805 verbindet.

Die Antenne 801 sendet ein Sendesignal 802 in Richtung der Füllgutoberfläche 804 aus, von der ein entsprechendes Rücksignal 803 reflektiert und daraufhin von der Antenne 801 aufgenommen wird.

Ergänzend ist darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Baukastensystem zum Herstellen einer Füllstandradarantenne, das Baukastensystem aufweisend:
ein erstes Modul (101);
ein zweites Modul (102);
wobei das erste Modul (101) ein Antennenhorn ausbildet, mit dielektrischem Material (107) gefüllt ist und zur Speisung des zweiten Moduls (102) mit einem Sendesignal ausgeführt ist;
wobei das zweite Modul (102) ausgewählt ist aus der Gruppe bestehend aus Parabolantenne, gefülltes Antennenhorn, Antennenhorn mit Linse, Standrohrantenne, und Stabantenne und zum Abstrahlen des Sendesignals zu einer Füllgutoberfläche ausgeführt ist.

2. Baukastensystem nach Anspruch 1,
wobei das erste Modul (101) zur lösbaren Verbindung mit dem zweiten Modul (102) ausgeführt ist.

3. Baukastensystem nach Anspruch 2,
wobei das erste Modul ein erstes Gewinde und das zweite Modul ein dem ersten Gewinde entsprechendes Gegengewinde zum Erzeugen der lösbaren Verbindung aufweist.

4. Baukastensystem nach Anspruch 2,
wobei die lösbare Verbindung als Flanschverbindung ausgeführt ist.

5. Baukastensystem nach einem der vorhergehenden Ansprüche,
weiterhin aufweisend ein drittes Modul (103), das als Hohlleiter (103) ausgeführt ist; wobei das erste Modul (101) zur lösbaren Verbindung mit dem dritten Modul (103) ausgeführt ist.

6. Baukastensystem nach einem der vorhergehenden Ansprüche,
wobei das erste Modul (101) einen Hohlleiterabschnitt (106) aufweist.

7. Baukastensystem nach einem der vorhergehenden Ansprüche,
wobei das erste Modul (101) eine Linse (105) aufweist, die zwischen dem ersten Modul und dem zweiten Modul (102) angeordnet ist.

8. Baukastensystem nach einem der vorhergehenden Ansprüche, ausgeführt für Frequenzen des Sendesignals im Bereich zwischen 75 GHz und 110 GHz.

9. Baukastensystem nach einem der vorhergehenden Ansprüche,
wobei ein Übergang zwischen dem ersten Modul (101) und dem zweiten Modul (102) spaltfrei ausgestaltet ist, so dass das zweite Modul (102) direkt an dem dielektrischem Material (107) des ersten Moduls beginnt.

10. Baukastensystem nach einem der vorhergehenden Ansprüche,
wobei das dielektrische Material (107) durch einen eingespritzten Thermoplast in dem ersten Modul (101) befestigt ist.

11. Baukastensystem nach einem der vorhergehenden Ansprüche,
wobei das dielektrische Material (107) zusammen mit einer Abdichtung durch einen Haltering (508) oder eine umlaufende Nase (605) an dem ersten Modul (101) gehalten wird.

12. Baukastensystem nach einem der vorhergehenden Ansprüche,
wobei das erste Modul (101) auch zur Füllstandmessung ohne das zweite Modul (102) ausgeführt ist.

13. Baukastensystem nach einem der vorhergehenden Ansprüche,
wobei das erste Modul (101) ein Gehäuse (604) mit einem darin von seiner, dem zweiten Modul (102) abgewandten Rückseite aus einschiebbaren Antennenhorn (603) aufweist.

14. Füllstandradarantenne (801), aufweisend ein erstes Modul (101) und ein zweites Modul (102) eines Baukastensystems nach einem der Ansprüche 1 bis 13.

15. Füllstandsradar (800) mit einer Füllstandsradarantenne (801), die ein erstes Modul (101) und ein zweites Modul (102) eines Baukastensystems nach einem der Ansprüche 1 bis 13 aufweist.
